# EUROPÄISCHE PATENTSCHRIFT

(11) **EP 2 514 663 B1**
(45) Veröffentlichungstag und Bekanntmachung des Hinweises auf die Patenterteilung: **18.02.2015**
(21) Anmeldenummer: 12001832.0
(22) Anmeldetag: 17.03.2012
(51) Int. Cl.: B62M 3/08

(54) **Fahrradpedal**
Bicycle pedal
Pédale de vélo

(30) Priorität: 21.04.2011 AT 5712011
(43) Veröffentlichungstag der Anmeldung: 24.10.2012
(73) Patentinhaber: Herbert, Jenny, 6840 Götzis (AT); Augustin, Heinz, 9300 Wittenbach (CH)
(72) Erfinder: Herbert, Jenny, 6840 Götzis (AT); Augustin, Heinz, 9300 Wittenbach (CH)
(74) Vertreter: Fechner, Thomas

(56) Entgegenhaltungen:
- EP-A1- 1 661 606
- WO-A1-2009/083787
- WO-A1-2010/109397
- DD-A5- 294 673
- DE-A1-102005 027 181
- DE-U1-202009 001 463
- EDUARDO NABINGER ET AL: "DEVELOPMENT OF A TRIAXIAL FORCE PLATFORM FOR THE MEASUREMENT OF FORCE AT A BICYCLE PEDAL", XXTH INTERNATIONAL SYMPOSIUM ON BIOMECHANICS IN SPORTS, ISBS 2002,, 1. Juli 2002 (2002-07-01), Seiten 290-293, XP007920764,

## Beschreibung

Die vorliegende Erfindung betrifft ein Fahrradpedal mit einem Pedalkörper, wobei der Pedalkörper eine erste Plattform und zumindest eine zweite Plattform und einen zwischen den Plattformen angeordneten Pedalachsaufnahmekörper aufweist, wobei im Pedalachsaufnahmekörper ein Pedalachsbolzen des Fahrradpedals um eine Pedalachse drehbar angeordnet oder anordenbar ist und die Plattformen ausschließlich mittels Zwischenstegen kraftübertragend miteinander verbunden sind und die erste Plattform ausschließlich über die Zwischenstege und über die zweite Plattform mit dem Pedalachsaufnahmekörper in kraftübertragender Verbindung steht, wobei Verformungsmesssensoren, insbesondere Dehnmessstreifen, zur Messung einer belastungsbedingten Verformung des Pedalkörpers an der ersten Plattform und/oder den Zwischenstegen und/oder der zweiten Plattform angeordnet sind und das Fahrradpedal zusätzlich zum Pedalkörper einen Krafteinleitungskörper aufweist.

Solche Fahrradpedale können im medizinisch-therapeutischen-Bereich, insbesondere in der Rehabilitation aber auch im Leistungssport bzw. im Sportbereich allgemein eingesetzt werden, um die für eine Person beim Treten in das Fahrradpedal eingeleiteten Kräfte zu messen.

Aus dem Artikel "Development of a triaxial force plateform for the measurement of force at a bicycle pedal" ISBS 2002, Cáceres -Extremadura - Spain, Seite 290 ff sind theoretische Berechnungen für ein Fahrradpedal bekannt. Allerdings ist es bei dem dort zumindest theoretisch berechneten Fahrradpedal notwendig, eine Kalibrierungsmatrix zu verwenden, um die mittels der Verformungsmesssensoren erzeugten Messsignale in die tatsächlich eingeleiteten Kräfte umrechnen zu können.

Die WO 2009/083 787 A1 zeigt ein Fahrradpedal, bei dem der Krafteinleitungskörper über zwei relativ lange Schrauben mit der ersten Plattform verbunden ist, wobei der Pedalachsaufnahmekörper zwischen der ersten Plattform und dem Krafteinleitungskörper angeordnet ist. Die EP 1 661 606 A1 offenbart ein Fahrradpedal, bei dem keine Trennung zwischen Krafteinleitungskörper und erster Plattform des Pedalkörpers vorgesehen ist. Die gattungsgemäße DD 294 673 zeigt ein Fahrradpedal, bei dem der Krafteinleitungskörper vollflächig in einem einzigen Krafteinleitungsbereich mit der ersten Plattform verbunden ist.

Aufgabe der Erfindung ist es, ein gattungsgemäßes Fahrradpedal dahingehend zu verbessern, dass die mittels Verformungsmesssensoren gemessenen Messsignale direkt proportional zu den eingeleiteten Kräften sind. Ziel ist es somit, aus den gemessenen Signalen direkt auf die eingeleiteten Kräfte schließen zu können, ohne dass hierfür eine Umrechnung mittels Kalibrierungsmatrix oder dergleichen notwendig ist.

Um dies zu erreichen, ist erfindungsgemäß vorgesehen, dass der Krafteinleitungskörper ausschließlich über vier Krafteinleitungsbereiche mit der ersten Plattform in kraftübertragender Verbindung steht, wobei zumindest einer der Krafteinleitungsbereiche auf einer Seite der ersten Plattform angeordnet ist und zumindest ein anderer der Krafteinleitungsbereiche bezüglich der Pedalachse auf einer dazu gegenüberliegenden Seite der ersten Plattform angeordnet ist.

Zunächst ist darauf hinzuweisen, dass bei erfindungsgemäßen wie auch bei gattungsgemäßen Fahrradpedalen die erste Plattform dazu vorgesehen ist, dass über sie beim Treten des Pedals die Kräfte in den Pedalkörper eingeleitet werden. Die erste Plattform steht aber an keiner Stelle in direkter kraftübertragender Verbindung mit dem Pedalachsaufnahmekörper und damit mit dem darin drehbar gelagerten Pedalachsbolzen. Vielmehr ist bei gattungsgemäßen wie bei erfindungsgemäßen Pedalkörpern vorgesehen, dass die erste Plattform ausschließlich über die Zwischenstege Kräfte auf die zweite Plattform und über die zweite Plattform auf den Pedalachsaufnahmekörper überträgt. Hierdurch wird dafür gesorgt, dass innerhalb des Pedalkörpers kein Kraftnebenschluss vorliegt. Dadurch wird sichergestellt, dass alle in die erste Plattform eingeleiteten Kräfte in entsprechenden Verformungen der Zwischenstege und der beiden Plattformen resultieren, sodass aus der Messung die- ser Verformungen mittels der Verformungsmesssensoren auf die in den Pedalkörper eingeleiteten Kräfte geschlossen werden kann. Bei gattungsgemäßen Fahrradpedalen reicht dies aber noch nicht dazu aus, dass man direkt aus den Messsignalen der Verformungsmesssensoren auf die eingeleiteten Kräfte schließen kann. Um die beim Stand der Technik noch benötigte Umrechnung der Messgrößen in die Kräfte zu vermeiden, sieht das erfindungsgemäße Fahrradpedal zusätzlich zum Pedalkörper also zusätzlich zu den beiden Plattformen und den sie verbindenden Zwischenstegen einen Krafteinleitungskörper vor, über welchen die von der das Fahrradpedal betätigenden Person aufgebrachten Kräfte auf die erste Plattform übertragen werden. Hierbei ist es vorgesehen, dass der Krafteinleitungskörper ausschließlich über die, definierten bzw. räumlich begrenzten Krafteinleitungsbereiche mit der ersten Plattform in kraftübertragender Verbindung steht. Weiters ist erfindungsgemäß vorgesehen, dass zumindest zwei der Krafteinleitungsbereiche bezogen auf die Pedalachse auf einander gegenüberliegenden Seiten der ersten Plattform angeordnet sind. Mittels dieser Krafteinleitungsbereiche werden die auf den Krafteinleitungskörper einwirkenden Kräfte somit immer sowohl hinter als auch vor der Pedalachse in die erste Plattform eingeleitet. Hierdurch wird erfindungsgemäß erreicht, dass die Messsignale direkt proportional zu den eingeleiteten Kräften sind und damit nicht noch einmal in einem Rechenschritt errechnet werden müssen. Die beim Stand der Technik benötigte Kalibrierungsmatrix wird somit nicht mehr benötigt. Die Messsignale stehen günstigerweise in einem linearen Zusammenhang mit den eingeleiteten Kräften.

Das erfindungsgemäße Pedal wird als Fahrradpedal bezeichnet. Der Vollständigkeit halber wird aber darauf hingewiesen, dass dies nicht dahingehend zu verstehen ist, dass solche Fahrradpedale ausschließlich an für die Fortbewegung vorgesehenen Fahrrädern montiert werden können. Erfindungsgemäße Fahrradpedale können natürlich auch genauso gut an stationären Fahrrädern wie z. B. Ergometern, Hometrainern u. dgl. eingesetzt werden. Wichtige Zielbereiche sind die medizinische und therapeutische Behandlung und Analyse von Patienten, insbesondere während der Rehabilitation. Erfindungsgemäße Fahrradpedale können aber genauso gut im Sportbereich und insbesondere im Leistungssport eingesetzt werden, um die Bewegungen und Kräfteverteilungen des Sportlers bzw. Leistungssportlers beim Fahrradfahren zu überprüfen und zu optimieren.

Mittels der Erfindung ist es erstmalig bei einem solchen Fahrradpedal bzw. Messkörper gelungen, unabhängig vom jeweiligen Pedalwinkel mit hoher Genauigkeit beide Kräfte in Z- und in X-Achse getrennt und ohne gegenseitigen Einfluss zu messen und damit visuell sichtbar machbar zu machen.

Diese Lösung ermöglicht es, die Kräfte mit einer Genauigkeit in allen 3 Achsen unter 0,5 % Linearitätsfehler zu messen.

Damit kann jetzt auch die muskuläre Belastung sowie die Belastung der Fuß-, Knie- und Hüftgelenke mit hoher Genauigkeit gemessen werden.

Ein weiterer Aspekt ist das optimale Trainieren auf dem Rennrad bezüglich des runden Tritts, d.h. es kann ein optimaler Krafteinsatz während der ganzen Kurbelumdrehung erreicht und dadurch mit großer Effizienz die Pedalleistung in die Vorwärtsbewegung umgesetzt werden.

Bezüglich einer Rehabilitation nach Bein- oder Fußoperationen kann jetzt ein Therapieplan für die Genesungsfortschritte erstellt und auch gemessen und so kontrolliert werden, um den Heilungsprozess zu optimieren.

Der Vollständigkeit halber wird auch darauf hingewiesen, dass unter einer kraftübertragenden Verbindung im Sinne der Erfindung eine Verbindung verstanden wird, über die zu messende Kräfte auch übertragen werden können. So können zwei Stege zwar theoretisch gesehen über die dazwischen angeordnete Luft als miteinander verbunden angesehen werden. Es handelt sich dabei aber nicht um eine im Sinne der Erfindung kraftübertragende Verbindung. Diese ist erst gegeben, wenn diese Stege direkt oder unter Zwischenschaltung weiterer, kraftübertragender Stege miteinander in Verbindung stehen.

Die erste wie auch die zweite Plattform können theoretisch als in sich geschlossene Platten ausgebildet sein. Günstiger ist es jedoch, wenn zumindest eine der beiden, vorzugsweise beide, Plattformen aus miteinander kraftübertragend verbundenen Stegen aufgebaut sind. So kann z. B. vorgesehen sein, dass die erste und/oder die zweite Plattform jeweils ein, zwei, vier oder mehr Längsstege aufweisen, wobei diese Längsstege mittels zumindest ein oder zwei Querstegen miteinander in kraftübertragender Verbindung stehen. Die Längsstege sind dabei günstigerweise orthogonal zur Pedalachse oder zu einer parallelen Pedalachse angeordnet. Die Querstege verlaufen günstigerweise parallel zur Pedalachse.

Besonders bevorzugte Ausgestaltungsformen der Erfindung sehen vor, dass die zumindest zwei Krafteinleitungsbereiche, welche bezüglich der Pedalachse auf einander gegenüberliegenden Seiten der ersten Plattform angeordnet sind, von der Pedalachse gleich weit beabstandet sind. Der Begriff beabstandet wird dabei dahingehend verstanden, dass ein Abstand größer Null vorliegt. Besonders günstig ist es, wenn die zumindest zwei Krafteinleitungsbereiche, welche bezüglich der Pedalachse auf einander gegenüberliegenden Seiten der ersten Plattform angeordnet sind, zueinander spiegelsymmetrisch bezüglich einer gedachten Symmetrieebene sind, wobei die Pedalachse in der Symmetrieebene liegt. Im Sinne einer möglichst hohen Messgenauigkeit ist es weiters günstig, wenn jeweils zwei der Zwischenstege zueinander spiegelsymmetrisch bezüglich einer gedachten Symmetrieebene ausgebildet und angeordnet sind, wobei die Pedalachse in der Symmetrieebene liegt. Die Zwischenstege sollten also günstigerweise nicht nur symmetrisch bezüglich der Symmetrieachse angeordnet sondern auch ausgebildet sein. Sie sollten an den einander entsprechenden Stellen somit sowohl das gleiche Material, als auch die gleichen Querschnitte aufweisen. Dies gilt auch für die Plattformen bzw. die Stege, aus denen die Plattformen gebildet sind.

In diesem Zusammenhang ist auch darauf hinzuweisen, dass bevorzugte Ausgestaltungsformen der Erfindung vorsehen, dass der Pedalkörper, also die beiden Plattformen, die Zwischenstege und der Pedalachsaufnahmekörper aus einem einzigen monolithischen Körper z. B. aus Aluminium oder einem anderen geeigneten Metall oder Kunststoff hergestellt ist. Besonders günstig ist hierbei die einstückige Ausführungsform des Pedalkörpers, bei der dieser aus einem einzigen Block herausgearbeitet wird.

Im Sinne einer definierten Übertragung der Kräfte von dem Krafteinleitungskörper auf die erste Plattform sehen bevorzugte Ausgestaltungsformen der Erfindung vor, dass jeder der Krafteinleitungsbereiche als eine Aufnahmeöffnung, vorzugsweise in der ersten Plattform, mit durch die Aufnahmeöffnung hindurchgeführtem Krafteinleitungsbolzen, vorzugsweise des Krafteinleitungskörpers, ausgebildet ist. Dabei kann durch jede Aufnahmeöffnung ein separater Krafteinleitungsbolzen hindurchgeführt sein. Die Krafteinleitungsbolzen können aber auch paarweise durch jeweils zwei Aufnahmeöffnungen hindurchgeführt sein, um die Kräfte vom Krafteinleitungskörper auf die erste Plattform des Pedalkörpers zu übertragen.

Um einen Schuh der das Fahrradpedal betätigenden Person definiert am Krafteinleitungskörper befestigen zu können, sehen bevorzugte Ausgestaltungsformen der Erfindung vor, dass der Krafteinleitungskörper eine Bindungseinrichtung zur Befestigung eines Schuhs am Krafteinleitungskörpers aufweist. Solche Bindungseinrichtungen sind an sich beim Stand der Technik bekannt. Die zugeordneten Pedale mit solchen Bindungseinrichtungen werden häufig als Klickpedale bezeichnet. Es können verschiedenste beim Stand der Technik bekannte Bindungseinrichtungen am Krafteinleitungskörper befestigt werden. Günstig ist es dabei im Allgemeinen, wenn die Bindungseinrichtung eine Bindungsplatte und zumindest einen, vorzugsweise federnd, bewegbaren, vorzugsweise schwenkbaren, Bindungsbacken zur Befestigung eines Bindungsgegenstücks des Schuhs auf der Bindungsplatte aufweist.

Bezüglich der Zahl und Anordnung der Verformungsmesssensoren sehen bevorzugte Ausgestaltungsformen der Erfindung vor, dass zwei, vier oder acht Verformungsmesssensoren an jeweils unterschiedlichen Stellen der ersten Plattform und/oder der zweiten Plattform und/oder der Verbindungsstege angeordnet sind und in einer Wheatstone'schen Halbbrücke oder Vollbrücke oder Doppelbrücke miteinander verschaltet sind. Als Verformungsmesssensoren können vor allem beim Stand der Technik an sich bekannte Dehnmessstreifen aber auch andere geeignete Verformungsmesssensoren eingesetzt werden. Bevorzugt ist jedenfalls vorgesehen, dass zumindest zwei der, in einer Wheatstone'schen Halbbrücke oder Vollbrücke oder Doppelbrücke miteinander verschalteten Verformungsmesssensoren bezogen auf die Pedalachse auf einander gegenüberliegenden Seiten des Pedalkörpers angeordnet sind, und vorzugsweise von der Pedalachse gleich weit beabstandet sind. Weiters ist es günstig, wenn zumindest zwei der in der Wheatstone'schen Halb-, Voll- oder Doppelbrücke miteinander verschalteten Verformungsmesssensoren bezüglich der Pedalachse diagonal auf einander gegenüberliegenden Seiten des Pedalkörpers angeordnet sind. Günstig ist hierbei eine spiegelsymmetrische Anordnung bezüglich eines auf der Pedalachse liegenden Symmetriepunktes. Grundsätzlich gibt es eine Vielzahl von Möglichkeiten der Anordnung von Verformungsmesssensoren um verschiedene Kraftkomponenten bestimmen zu können.

In der nachfolgenden Figurenbeschreibung werden unterschiedliche Ausgestaltungsformen der Erfindung beispielhaft vorgestellt. Die Fig. zeigen:
- Fig. 1: ein stark schematisiert dargestelltes Fahrradpedal an einer Tretkurbel;
- Fig. 2: den Pedalkörper einer ersten erfindungsgemäßen Ausgestaltungsform eines Fahrradpedals in Form eines sogenannten 4-Stegpedals;
- Fig. 3: das erfindungsgemäße Fahrradpedal, wobei der Pedalkörper aus Fig. 2 mit einem erfindungsgemäßen Krafteinleitungskörper in den Krafteinleitungsbereichen verbunden ist;
- die Fig. 4 bis 10: verschiedene Ansichten und Schnitte durch das Fahrradpedal aus Fig. 3, wobei verschiedene Anordnungen von Verformungsmesssensoren am Pedalkörper des Fahrradpedals eingezeichnet sind;
- die Fig. 11 bis 20: eine Darstellung zu einem zweiten erfindungsgemäßen Ausführungsbeispiels eines Fahrradpedals mit daran angeordneten Verformungsmesssensoren.
- Fig. 21: eine Wheatstone'sche Vollbrücke;
- Fig. 22: eine Wheatstone'sche Halbbrücke und
- Fig. 23: eine Wheatstone'sche Doppelbrücke.
- Fig. 24: ein Verschaltungsschema für das erste Ausführungsbeispiel.
- Fig. 25: ein Verschaltungsschema für das zweite Ausführungsbeispiel und
- Fig. 26: beispielhaft den linearen Zusammenhang zwischen den gemessenen Signalen und den tatsächlich eingeleiteten Kräften.

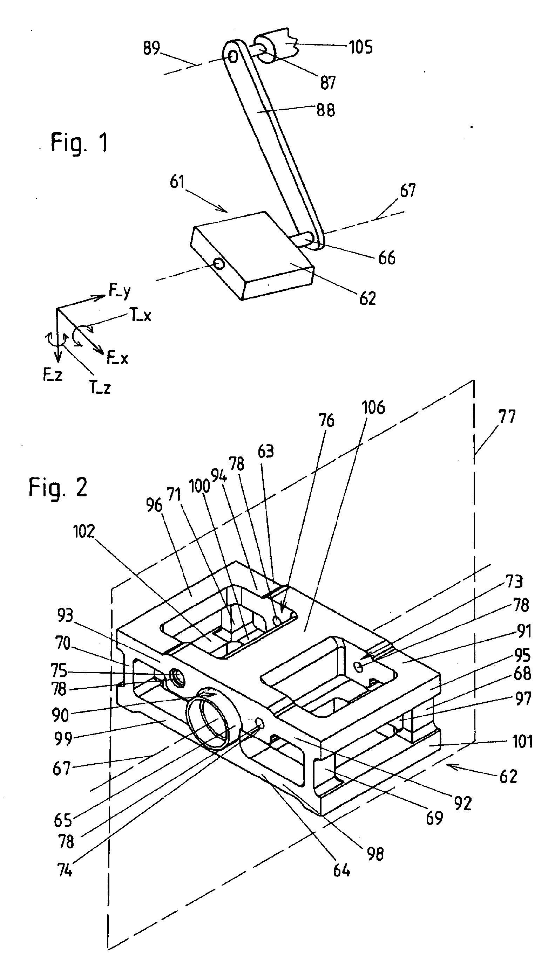

Fig. 1 zeigt stark schematisiert, wie ein erfindungsgemäßes Fahrradpedal 61 über den Pedalachsbolzen 66 an der Tretkurbel 88 drehbar befestigt sein kann. Die Tretkurbel 88 ist wiederum über den Kurbelachsbolzen 87 in einem entsprechenden Tretlager drehbar gelagert. Dabei kann die Tretkurbel 88 samt Fahrradpedal 61 um die Kurbelachse 89 gedreht werden. Der Pedalkörper 62 des Fahrradpedals 61 kann um die Pedalachse 67 und damit auch um den Pedalachsbolzen 66 relativ zur Tretkurbel 88 gedreht werden. Dies ist Standard bei an sich bekannten Fahrradpedalen, sodass dies nicht weiter erläutert werden muss. Es wird lediglich darauf hingewiesen, dass das Fahrradpedal 61 den Pedalkörper 62 und den Pedalachsbolzen 66 sowie weitere, unten noch näher erläuterte zusätzliche erfindungsgemäße Bauteile umfasst. Links neben dem schematisch dargestellten Fahrradpedal 61 sind in Fig. 1 noch die Richtungen der zu bestimmenden Kraftkomponenten F_X, F_Y und F_Z eingezeichnet. Als F_Ywird im Folgenden die Kraftkomponente bezeichnet, welche in Richtung der Pedalachse 67 verläuft. F_Z ist die Kraftkomponente in Vertikalrichtung. F_X ist die Kraftkomponente in die dritte Richtung, also in die Horizontalrichtung. T_X und T_Z sind die Drehmomente, welche auf das Fahrradpedal 61 einwirken können. T_X ist dabei das Drehmoment um die Achse F_X, T_Z ist das Drehmoment um die Vertikalachse F_Z.

Fig. 2 zeigt ein erstes erfindungsgemäßes Ausführungsbeispiel eines Pedalkörpers 62 eines erfindungsgemäßen Fahrradpedals 61, wobei allerdings der Krafteinleitungskörper 72 dieses Fahrradpedals 61 noch nicht am Pedalkörper 62 befestigt ist. Der Pedalkörper 62 dieses Ausführungsbeispiels weist eine erste Plattform 63 und eine zweite Plattform 64 auf. Diese beiden Plattformen 63, 64 sind ausschließlich über die vier Zwischenstege 68, 69, 70 und 71 miteinander kraftübertragend verbunden. Im Betrieb liegen die erste Plattform 63 und die zweite Plattform 64 im Wesentlichen horizontal. Die Zwischenstege 68, 69, 70 und 71 verlaufen im Betriebszustand in der Regel im Wesentlichen vertikal.

An der zweiten Plattform 64 ist der Pedalachsaufnahmekörper 65 befestigt. Der Pedalachsaufnahmekörper 65 dient der Aufnahme und der drehbaren Lagerung des Pedalachsbolzens 66. In den Fig. 2 bis 20 ist der Pedalachsbolzen 66 nicht dargestellt. Die Lagerung des Pedalachsbolzens 66 im Pedalachsaufnahmekörper 65 kann, wie beim Stand der Technik bekannt, erfolgen. Wichtig ist bei gattungs- wie auch bei erfindungsgemäßen Pedalen, dass die erste Plattform 63 ausschließlich über die Zwischenstege 68, 69, 70 und 71 mit der zweiten Plattform 64 und damit ausschließlich über diese Zwischenstege und die zweite Plattform mit dem Pedalachsaufnahmekörper 65 kraftübertragend verbunden ist. Um Kraftnebenschlüsse, also die Möglichkeit einer direkten Kraftübertragung zwischen erster Plattform 63 und Pedalachsaufnahmekörper 65 sicher auszuschalten, ist es günstig, wenn wie im gezeigten Ausführungsbeispiel eine Freistellung 90 bzw. ein entsprechender Freiraum zwischen erster Plattform 63 und Pedalachsaufnahmekörper 65 vorgesehen ist.

Im gezeigten wie auch in anderen Ausführungsbeispielen sind sowohl die erste Plattform 63 als auch die zweite Plattform 64 nicht als durchgehende Platten sondern aus miteinander kraftübertragend verbundenen Stegen aufgebaut. Die erste Plattform 63 weist hierzu insgesamt vier Längsstege 91, 92, 93 und 94 auf, welche über die Querstege 95 und 96 sowie über einen mittleren Quersteg 106 miteinander kraftübertragend verbunden sind. Im gezeigten Ausführungsbeispiel bilden die Längsstege 91, 92, 93 und 94 zusammen mit den Querstegen 95 und 96 einen Rahmen, der die erste Plattform zusammen mit dem Mittelsteg 106 bildet und auch nach außen begrenzt.

Im ersten Ausführungsbeispiel gemäß der Fig. 2 bis 10 ist die zweite Plattform 64 zumindest ähnlich zur ersten Plattform 63 ausgebildet. Auch hier gibt es insgesamt vier Längsstege 97, 98, 99 und 100, sowie zwei diese miteinander verbindende Querstege 101 und 102. Auch diese Längsstege 97 bis 100 und Querstege 101 und 102 bilden einen Rahmen, der die zweite Plattform 64 nach außen begrenzt. Anstelle des Mittelsteges 106 ist in der zweiten Plattform 64 der Pedalachsaufnahmekörper 65 vorgesehen. Der Mittelsteg 106 ist mittels der bereits genannten Freistellung 90 vom Pedalachsaufnahmekörper 65 getrennt, sodass es auch hier zu keinen Kraftnebenschlüssen kommen kann, sondern alle auf die erste Plattform 63 eingeleiteten Kräfte ausschließlich über die Zwischenstege 68, 69, 70 und 71 auf die Stege der zweiten Plattform 64 übertragen werden. Diese übertragen diese Kräfte dann auf den Pedalachsaufnahmekörper 65.

Die Querstege 95, 96, 101 und 102 verlaufen in diesem Ausführungsbeispiel alle parallel zur Pedalachse 67. Die Längsstege 91 bis 94 und 98 bis 100 verlaufen in diesem Ausführungsbeispiel alle orthogonal zur Pedalachse 67 bzw. zu einer Parallelen durch die Pedalachse 67. Im gezeigten Ausführungsbeispiel handelt es sich, wie allgemein günstig, bei dem Pedalkörper 62 und seinen bisher geschilderten Komponenten um einen einstückig ausgebildeten Körper. Alle Bauteile sind somit in der gezeigten Form materialschlüssig miteinander verbunden. Dies ist im Sinne einer optimalen Kraftübertragung besonders günstig.

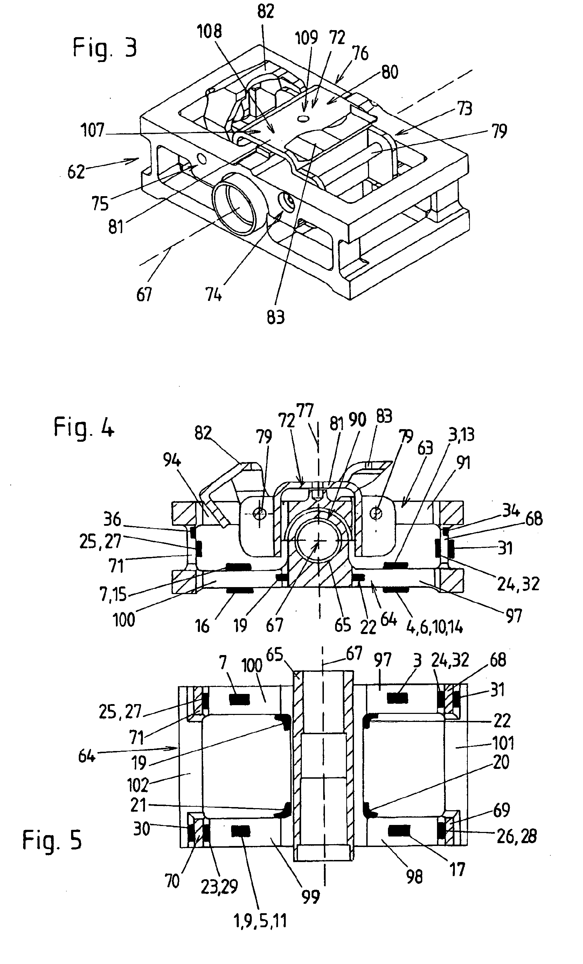

In Fig. 2 ist noch die Symmetrieebene 77 eingezeichnet, bezüglich der der Pedalkörper 62, die Krafteinleitungsbereiche 73, 74, 75 und 76 und auch der erst in Fig. 3 dargestellte Krafteinleitungskörper die eingangs genannten Symmetrien aufweist. Die Pedalachse 67 verläuft in dieser Symmetrieebene 77. Sind die erste Plattform 63 und die zweite Plattform 64 horizontal ausgerichtet, so verläuft die Symmetrieebene 77 vertikal.

In Fig. 3 ist nun erfindungsgemäß der Krafteinleitungskörper 72 über die Krafteinleitungsbereiche 73, 74, 75 und 76 mit der ersten Plattform 63 des Pedalkörpers 62 verbunden. Die Krafteinleitungsbereiche 73, 74, 75 und 76 stellen die einzigen kraftübertragenden Verbindung zwischen Krafteinleitungskörper 72 und der ersten Plattform 63 bzw. dem gesamten Pedalkörper 62 dar. Der Krafteinleitungskörper 72 weist im gezeigten Ausführungsbeispiel eine Bindungseinrichtung 80 auf. Diese umfasst eine Bindungsplatte 81 sowie zwei Bindungsbacken 82 und 83. Im gezeigten Ausführungsbeispiel ist der vordere Bindungsbacken 83 starr an der Bindungsplatte 81 befestigt, während der hintere Bindungsbacken 82 gegenüber der Bindungsplatte 81 und dem Bindungsbacken 82 verschwenkbar ist, um das Einsteigen einer hier nicht dargestellten, am Fahrradschuh angebrachten Verbindungsplatte zu ermöglichen. Solche Bindungseinrichtungen 80 sind beim Stand der Technik an sich bekannt und müssen daher nicht weiter erläutert werden. Es sei lediglich darauf hingewiesen, dass die Bindungseinrichtung 80 in unterschiedlichsten an sich bekannten Ausgestaltungen ausgeführt und am Krafteinleitungskörper 72 befestigt bzw. in diesem integriert sein können. Die jeweils paarweise spiegelsymmetrisch bezüglich der Symmetrieebene 77 angeordneten Krafteinleitungsbereiche 73, 74, 75 und 76 sind im gezeigten Ausführungsbeispiel als Aufnahmeöffnung 78 in der ersten Plattform 63 und durch diese Aufnahmeöffnung 78 hindurchgeführte Krafteinleitungsbolzen 79 ausgeführt. Im gezeigten Ausführungsbeispiel ist jeweils ein Krafteinleitungsbolzen 79 durch zwei einander gegenüberliegende Aufnahmeöffnungen 78 hindurchgeführt. Dies muss aber nicht so sein. Es kann auch für jeden Krafteinleitungsbereich 73, 74, 75 und 76 ein separater Krafteinleitungsbolzen 79 vorgesehen sein.

Durch die Verwendung eines erfindungsgemäßen Krafteinleitungskörpers 72 wird es möglich, mit den anschließend weiter unten noch erläuterten Anordnungen von Verformungsmesssensoren 1 bis 58 Messsignale direkt zu messen, welche direkt proportional zu den zu bestimmenden Kraftkomponenten F_X, F_Y und/oder F_Z und/oder direkt proportional zu den eingeleiteten Drehmomenten T_X oder T_Z sind. Ein weiterer Vorteil der erfindungsgemäßen Verbindung des Krafteinleitungskörpers 72 mit der ersten Plattform 63 über definierte vor und hinter der Pedalachse 67 liegende Krafteinleitungsbereiche 73, 74, 75 und 76 ist, dass das Messsignal den korrekten Wert der auf den Krafteinleitungskörper 72 eingeleiteten Kraftkomponente oder Drehmomentkomponente wiedergibt, unabhängig davon, an welcher Stelle genau die Bindungsplatte 81 bzw. der Krafteinleitungskörper 72 belastet wird. Es macht also keinen Unterschied wo auf der Bindungsplatte 81 genau die Kraftkomponente oder das Drehmoment eingeleitet wird. Solange der Betrag konstant ist, ist auch das generierte Messsignal konstant. Die Punkte 107, 108 und 109 veranschaulichen beispielhaft verschiedene Krafteinleitungspunkte auf die Bindungsplatte 81 bzw. den Krafteinleitungskörper 72.

Die Fig. 4 bis 10 zeigen verschiedene Ansichten auf das Fahrradpedal 61 des ersten Ausführungsbeispiels, wobei die hier als an sich bekannte Dehnmessstreifen ausgeführten Verformungsmesssensoren 1 bis 58, soweit in der jeweiligen Abbildung darstellbar, eingezeichnet sind. Vorausschickend wird hierzu ausgeführt, dass bei erfindungsgemäßen Sensoren natürlich nicht alle hier dargestellten Verformungsmesssensoren 1 bis 58 realisiert sein müssen. Welche Verformungsmesssensoren 1 bis 58 am Fahrradpedal 61 tatsächlich vorhanden sind, hängt davon ab, welche Kraft- und Drehmomentkomponenten gemessen werden sollen. Wie anschließend anhand von Beispielen gezeigt, können zur Messung einer einzelnen Kraftkomponente zwei, vier oder auch acht, an verschiedenen Stellen des Fahrradpedals 61 angebrachte Verformungsmesssensoren 1 bis 58 herangezogen werden. Es gibt auch, wie später noch erläutert, verschiedene Möglichkeiten eine ein und dieselbe Komponente zu messen. Weiters sei darauf hingewiesen, dass trotz der umfangreichen Darstellung hier nicht abschließend alle Möglichkeiten der Anordnung von Verformungsmesssensoren 1 bis 58 und deren Verschaltungen eingezeichnet sind. Weiters ist darauf hinzuweisen, dass einige der hier eingezeichneten Verformungsmesssensoren 1 bis 58, welche in mehreren Schaltungen bzw. Konfigurationen verwendet werden, mit mehreren Bezugszeichen bezeichnet sind. Es handelt sich aber auch im Falle von mehreren Bezugszeichen für einen Verformungsmesssensor immer nur um einen einzigen Verformungsmesssensor bzw. Dehnmessstreifen an der jeweiligen Stelle. Abschließend sei noch darauf hingewiesen, dass die in der jeweiligen Ansicht durchgezogen dargestellten Verformungsmesssensoren 1 bis 58 in dieser Ansicht so auch zu sehen sind, während die gestrichelt dargestellten Verformungsmesssensoren 1 bis 58 jeweils hinter einem Steg angeordnet und damit in der jeweiligen Ansicht eigentlich verborgen sind.

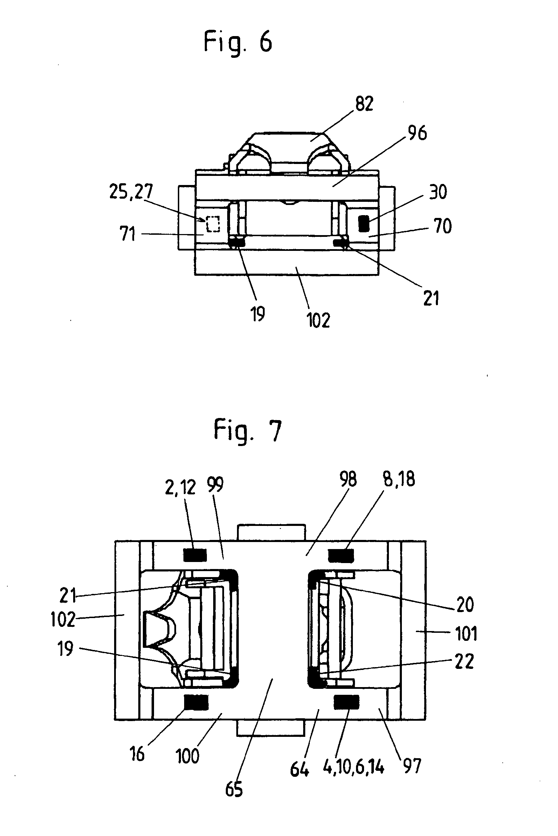

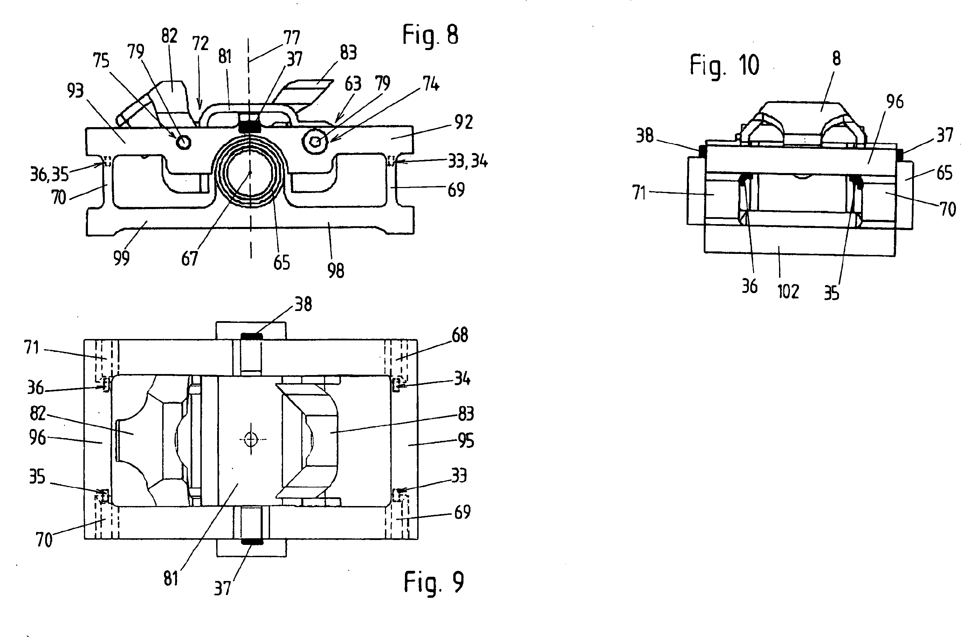

Um die Anordnung und Positionierung der verschiedenen Verformungsmesssensoren 1 bis 58 darstellen zu können, sind für das erste Ausführungsbeispiel in den Fig. 4 bis 10 insgesamt sieben Darstellungen gewählt worden. Fig. 4 zeigt einen Längsschnitt durch das Fahrradpedal 61 entlang einer ersten Schnittebene. Diese erste Schnittebene steht normal zur Symmetrieebene 77 und die Pedalachse 67 bildet eine Flächennormale auf diese Schnittebene. In Fig. 5 ist ebenfalls ein Längsschnitt dargestellt. Allerdings liegt hier die Schnittebene zwar normal zur Symmetrieebene 77, verläuft aber darüber hinaus entlang der Pedalachse 67. In Fig. 5 ist somit eine Draufsicht auf die zweite Plattform 64 gezeigt. Fig. 6 zeigt eine Ansicht von hinten auf das Fahrradpedal 61 und Fig. 7 eine Ansicht von unten auf die zweite Plattform 64. Fig. 8 zeigt eine Seitenansicht, Fig. 9 eine Draufsicht und Fig. 10 noch einmal eine Ansicht von hinten, also aus derselben Perspektive wie Fig. 6, auf das Fahrradpedal 61.

In Fig. 8 ist besonders gut zu sehen, dass zumindest einer der Krafteinleitungsbereiche 73 - 76 auf einer Seite der ersten Plattform 63 angeordnet ist und zumindest ein anderer der Krafteinleitungsbereiche 73 - 76 bezüglich der Pedalachse 67 auf einer dazu gegenüberliegenden Seite der ersten Plattform 63 angeordnet ist. Bevor nun auf die Lage und Verschaltung der Verformungsmesssensoren 1 bis 58 eingegangen wird, wird nochmals auf die in diesem Fahrradpedal 61 realisierten Symmetrien hingewiesen. Diese sind besonders gut in Fig. 4 und 8 zu erkennen. In Fig. 8 ist zunächst gut zu sehen, dass die beiden in dieser Perspektive sichtbaren Krafteinleitungsbereiche 74 und 75 von der Pedalachse gleich weit beabstandet sind. Sie sind im gezeigten Ausführungsbeispiel aber nicht nur gleich weit beabstandet, sondern liegen spiegelsymmetrisch bezüglich der gedachten Symmetrieebene 77, in welcher auch die Pedalachse 67 liegt. Sowohl in Fig. 4 als auch in Fig. 8 ist auch zu erkennen, dass sowohl die erste Plattform 63 als auch die zweite Plattform 64 bezüglich der bereits genannten Symmetrieachse 77 spiegelsymmetrisch sind. Auch die Zwischenstege 68 bis 71 sind bezüglich dieser Symmetrieebene 77 sowohl spiegelsymmetrisch angeordnet als auch ausgebildet. Bei diesen Spiegelsymmetrien steht vor allem im Vordergrund, dass durch eine entsprechende Krafteinleitung in dem Teil des Pedalkörpers 62 vor der Symmetrieebene 77 dieselben Verformungen auftreten, wie in dem Teil des Pedalkörpers 62, welcher hinter der Symmetrieebene 77 liegt. Der Begriff vorne bezeichnet dabei in dem gezeigten Ausführungsbeispiel den Teil des Pedalkörpers 62, auf dessen Seite bezüglich der Symmetrieebene 77 der Bindungsbacken 83 angeordnet ist. Der Bereich hinter der Symmetrieachse 77 ist daran zu erkennen, dass dort der Bindungsbacken 82 angeordnet ist.

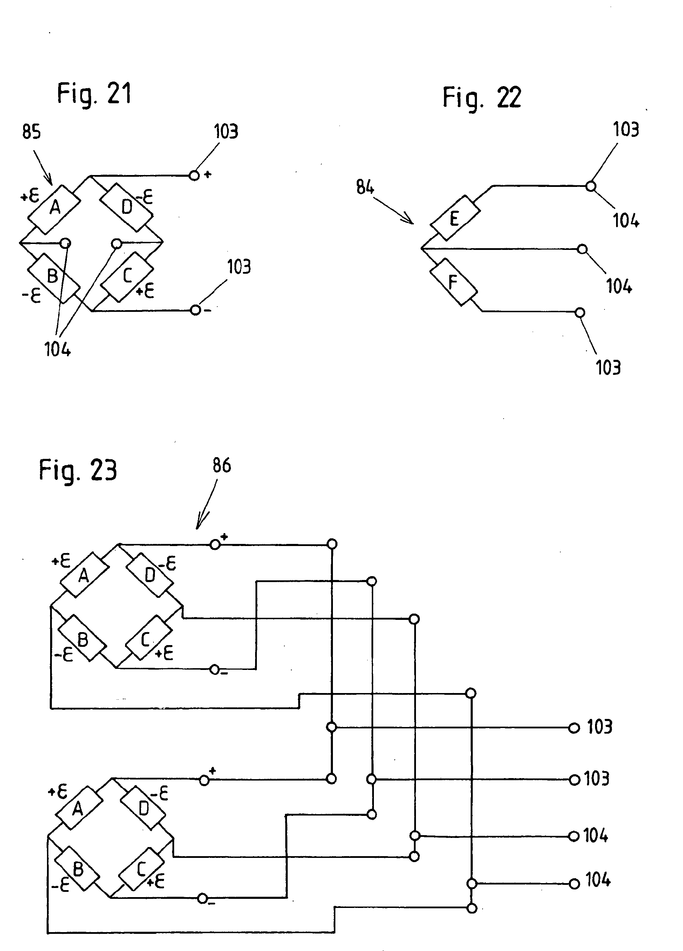

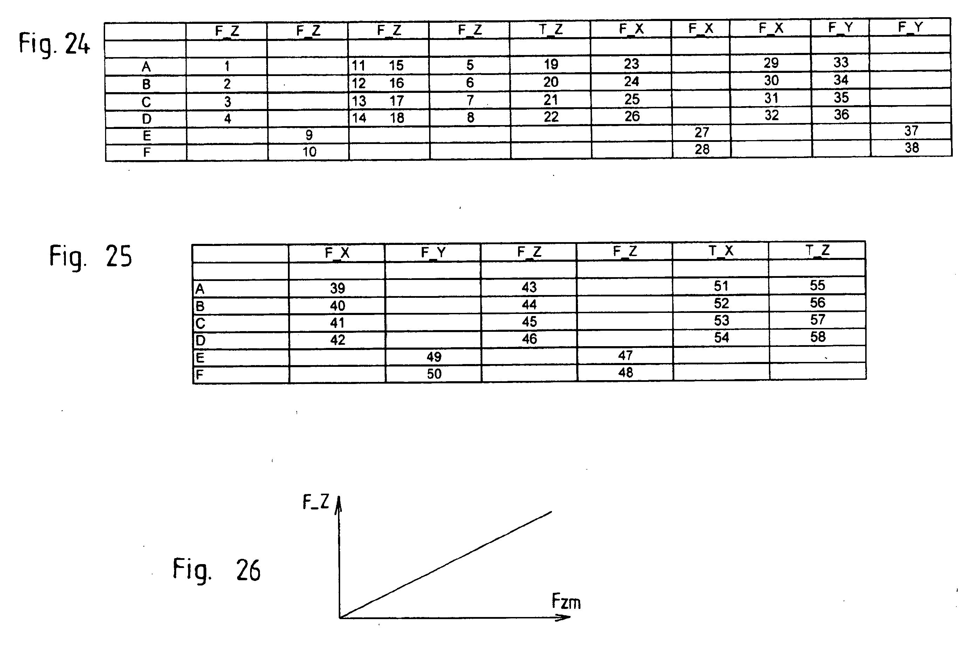

Wie bereits ausgeführt, können, um die einzelnen Kraftkomponenten F_X, F_Y und/oder F_Z bzw. die Drehmomente T_X und/oder T_Z zu bestimmen, verschiedene, an verschiedenen Positionen angeordnete Verformungsmesssensoren 1 bis 58 verwendet werden. In den Fig. 4 bis 10 sind für das erste Ausführungsbeispiel die Verformungsmesssensoren 1 bis 38 eingezeichnet. Die Fig. 21, 22 und 23 zeigen Möglichkeiten, wie diese einzelnen Verformungsmesssensoren miteinander verschaltet werden können, um das jeweilige Messsignal, welches dann proportional zur jeweiligen Kraft- oder Drehmomentkomponente ist, zu bestimmen. Fig. 21 zeigt dabei eine Wheatstone'sche Vollbrücke. Fig. 22 zeigt eine Wheatstone'sche Halbbrücke. Fig. 23 zeigt eine Wheatstone'sche Doppelbrücke. Die Positionen der Verformungsmesssensoren in der jeweiligen Wheatstone'schen Brücke 84, 85 und 86 sind durch die Buchstagen A, B, C, D, E und F gekennzeichnet. Die Zuordnung ergibt sich für das erste Ausführungsbeispiel gemäß der Fig. 2 bis 10 aus der Tabelle in Fig. 24. Hier sind jeweils verschiedene Alternativen zur Bestimmung der einzelnen Kraftkomponenten und Drehmomentkomponenten beispielhaft angeführt. So kann z. B., wenn ein zur Kraftkomponente F_Z proportionales Messsignal gemessen werden soll, auf die Verformungsmesssensoren 1, 2, 3 und 4 zurückgegriffen werden. Diese können hierzu in der in Fig. 21 gezeigten Wheatstone'schen Vollbrücke miteinander verschaltet sein, indem man in dieser Schaltung den Verformungsmesssensor 1 auf die Position A, den Verformungsmesssensor 2 auf die Position B, den Verformungsmesssensor 3 auf die Position C und den Verformungsmesssensor 4 auf die Position D der Wheatstone'schen Vollbrücke setzt, wie dies aus Fig. 24 hervorgeht. Alternativ kann ein zur Kraftkomponente F_Z proportionales Messsignal aber auch durch die Verwendung von nur zwei Verformungsmesssensoren 9 und 10 erzeugt werden. So kann man z. B. den Verformungsmesssensor 9 auf die Position E der Wheatstone'schen Halbbrücke 84 aus Fig. 22 und den Verformungsmesssensor 10 auf die Position F dieser Wheatstone'schen Halbbrücke 84 setzen. Es ist aber auch genauso gut möglich, acht Verformungsmesssensoren 11 bis 18 zur Messung eines zur Kraftkomponente F_Z proportionalen Signals heranzuziehen. So können die Verformungsmesssensoren 11 bis 14 auf die Position A bis D der ersten Vollbrücke und die Verformungsmesssensoren 15 bis 18 auf die Positionen A bis D der zweiten Vollbrücke der in Fig. 23 dargestellten Wheatstone'schen Doppelbrücke gesetzt werden. Generell gesprochen, wird eine umso höhere Signalqualität erreicht, je mehr Verformungsmesssensoren 1 bis 58 zur Bestimmung des Messsignals herangezogen werden.

Im Sinne einer gerafften Darstellung wird darauf verzichtet, auf jede einzelne Schaltung explizit einzugehen. Die beispielhaft dargestellten Möglichkeiten, die Komponenten F_X, F_Y und F_Z zu bestimmen, ergeben sich für das erste Ausführungsbeispiel aus der Zusammenschau der Wheatstone'schen Messbrücken gemäß der Fig. 21 bis 23, der Fig. 4 bis 10 und der Zuordnungstabelle gemäß Fig. 24. Bei den Wheatstone'schen Messbrücken 84, 84 und 86 gemäß der Fig. 21 bis 23 sei noch darauf hingewiesen, dass mit dem Bezugszeichen 103 die jeweiligen Spannungseinspeisungspunkte und mit dem Bezugszeichen 104 die Signalabgriffpunkte bezeichnet sind, an welchen das Messsignal abgegriffen wird. Wheatstone'sche Messbrücken 84, 85 und 86 der genannten Art sind an sich bekannt und müssen nicht weiter erläutert werden.

Generell gesprochen, ist es bezüglich der Anordnung der Verformungsmesssensoren günstig, wenn zumindest zwei der in einer jeweiligen Wheatstone'schen Halb-, Voll- oder Doppelbrücke 84 bis 86 miteinander verschalteten Verformungsmesssensoren auf einander gegenüberliegenden Seiten der Symmetrieebene 77 bzw. Pedalachse 67 angeordnet sind. Vorzugsweise ist sogar vorgesehen, dass zumindest zwei dieser Verformungsmesssensoren, welche in einer Halb-, Voll- oder Doppelbrücke miteinander verschaltet sind, jeweils diagonal gegenüberliegend bzw. punktsymmetrisch bezüglich eines in der Symmetrieebene 77 liegenden Symmetriepunktes angeordnet sind. Die genannten, entsprechend hintereinander verschalteten Verformungsmesssensoren 1 bis 58 sind günstigerweise paarweise auch gleich weit von der Symmetrieebene 77 beabstandet.

Wie die verschiedenen, beispielhaft angeführten Verschaltungen zeigen, sind die für die Kraftkomponente F_Z zur Messsignalbestimmung vorgesehenen Verformungsmesssensoren 1 bis 18 bevorzugt an der zweiten Plattform 64 bzw. an deren Längsstegen 97 bis 100 angeordnet. Die zur Bestimmung der Kraftkomponente F_X verwendeten Messsignale werden günstigerweise von Verformungsmesssensoren 23 bis 32 generiert, welche an den Zwischenstegen 68 bis 71 befestigt sind und deren Verformung messen. Zur Bestimmung der Kraftkomponente F_Y in Richtung der Pedalachse 67 können die Verformungsmesssensoren 33 bis 36 in den Übergangsbereichen zwischen den Zwischenstegen 68 und 71 und den ersten und zweiten Plattformen 63 und 64 bzw. deren Querstegen 95, 96, 101 und 102 angeordnet werden, wie dies besonders gut aus den Fig. 8 bis 10 hervorgeht. Die zur Messung der Drehmomentkomponente T_Z verwendeten Verformungsmesssensoren 19 bis 22 sind besonders gut in Fig. 5 zu sehen. Sie sind günstigerweise, wie hier dargestellt, in den Kreuzungspunkten zwischen den Längsstegen 97 bis 100 der zweiten Plattform 64 und dem Pedalachsaufnahmekörper 65 angeordnet.

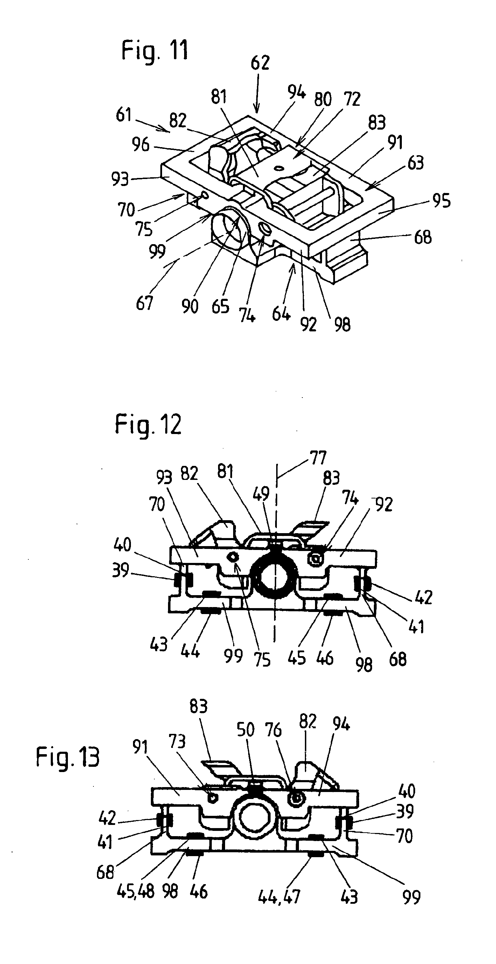

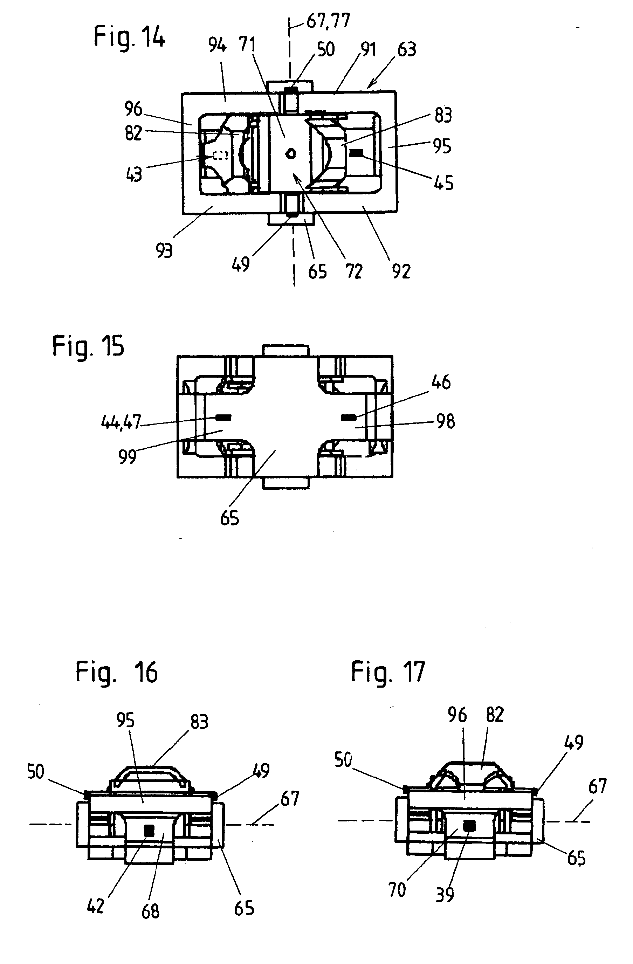

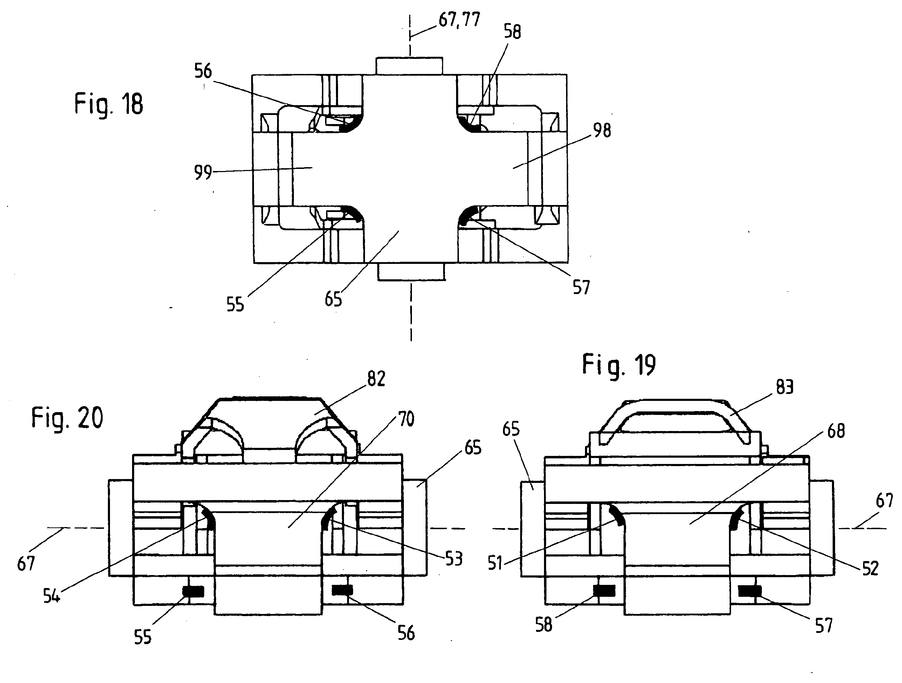

Das zweite Ausführungsbeispiel eines erfindungsgemäßen Fahrradpedals 61 ist in den Fig. 11 bis 20 gezeigt. Die bezüglich des ersten Ausführungsbeispiels bereits erläuterten Symmetrien sind auch hier realisiert. Die Symmetrieebene 77 ist in Fig. 12 beispielhaft eingezeichnet. Fig. 11 zeigt eine perspektivische Ansicht von oben auf das Fahrradpedal 61. Die Fig. 12 und 13 zeigen Seitenansichten von den einander gegenüberliegenden Seiten. Fig. 14 zeigt eine Draufsicht, Fig. 15 eine Ansicht von unten. Fig. 16 zeigt die Ansicht von vorne, Fig. 17 die Ansicht von hinten. Fig. 18 eine weitere Ansicht von unten. Fig. 19 eine weitere Ansicht von vorne und Fig. 20 eine weitere Ansicht von hinten auf dieses Fahrradpedal 61 des zweiten Ausführungsbeispiels. Für die Anordnung und Verschaltung der hier ebenfalls günstigerweise als Dehnmessstreifen ausgeführten Verformungsmesssensoren 39 bis 58 gilt das zum ersten Ausführungsbeispiel Gesagte, allerdings ist die Zuordnungstabelle der hier verwendeten Verformungsmesssensoren 39 bis 58 zu den Positionen A bis F in den verschiedenen Wheatstone'schen Brücken 84 bis 86 in Fig. 25 wiedergegeben.

Der Aufbau der ersten Plattform 63 sowie die Befestigung des Krafteinleitungskörpers 72 über die Krafteinleitungsbereiche 73 bis 76 entspricht beim zweiten Ausführungsbeispiel dem Aufbau des ersten Ausführungsbeispiels. Der wesentliche Unterschied zum ersten Ausführungsbeispiel liegt im Aufbau der zweiten Plattform 64. Anstelle der insgesamt vier Längsstege 97 bis 100 des ersten Ausführungsbeispiels weist die zweite Plattform 64 des zweiten Ausführungsbeispiels lediglich zwei mittig angeordnete Längsstege 98 und 99 auf. Entsprechend sind die beiden Plattformen 63 und 64 dieses zweiten Ausführungsbeispiels auch nur über zwei Zwischenstege 68 und 70 kraftübertragend miteinander verbunden. Zur Freistellung 90 zwischen der ersten Plattform 63 und dem Pedalachsaufnahmekörper 65 gilt das einleitend zum ersten Ausführungsbeispiel Gesagte.

Fig. 26 zeigt noch eine grafische Darstellung der Proportionalität zwischen dem zwischen den Signalabgriffen 104 abgegriffenen Messsignal und der tatsächlich eingeleiteten zu bestimmenden Kraftkomponente. Beispielhaft ist hier die vertikale Kraftkomponente F_Z und das zugeordnete Messsignal Fzm dargestellt. Entsprechende Darstellungen ergeben sich aber auch für die anderen Kraftkomponenten sowie auch für die Drehmomentkomponenten. Besonders wichtig ist dabei noch darauf hinzuweisen, dass bei einer reinen Einleitung in Richtung einer der Kraftkomponenten die anderen Komponenten keine Messsignale bzw. das Messsignal Null zeigen. Bei einer Krafteinleitung ausschließlich in Richtung F_Z treten somit keine Messsignale bzw. das Messsignal Null für F_X, F_Y und auch kein Messsignal bzw. das Messsignal Null für die Drehmomentkomponenten T_X und T_Z auf.

### Legende zu den Hinweisziffern:

- 1 - 58: Verformungsmesssensor
- 61: Fahrradpedal
- 62: Pedalkörper
- 63: erste Plattform
- 64: zweite Plattform
- 65: Pedalachsaufnahmekörper
- 66: Pedalachsbolzen
- 67: Pedalachse
- 68 - 71: Zwischensteg
- 72: Krafteinleitungskörper
- 73 - 76: Krafteinleitungsbereich
- 77: Symmetrieebene
- 78: Aufnahmeöffnung
- 79: Krafteinleitungsbolzen
- 80: Bindungseinrichtung
- 81: Bindungsplatte
- 82: Bindungsbacken
- 83: Bindungsbacken
- 84: Wheatstone'sche Halbbrücke
- 85: Wheatstone'sche Vollbrücke
- 86: Wheatstone'sche Doppelbrücke
- 87: Kurbelachsbolzen
- 88: Tretkurbel
- 89: Kurbelachse
- 90: Freistellung
- 91 - 94: Längssteg
- 95 - 96: Quersteg
- 97 - 100: Längssteg
- 101 - 102: Quersteg
- 103: Speisung
- 104: Signalabgriff
- 105: Tretlager
- 106: Mittelsteg
- 107 - 109: Krafteinleitungspunkte

## Patentansprüche

1. Fahrradpedal (61) mit einem Pedalkörper (62), wobei der Pedalkörper (62) eine erste Plattform (63) und zumindest eine zweite Plattform (64) und einen zwischen den Plattformen (63, 64) angeordneten Pedalachsaufnahmekörper (65) aufweist, wobei im Pedalachsaufnahmekörper (65) ein Pedalachsbolzen (66) des Fahrradpedals (61) um eine Pedalachse (67) drehbar angeordnet oder anordenbar ist und die Plattformen (63, 64) ausschließlich mittels Zwischenstegen kraftübertragend miteinander verbunden sind und die erste Plattform (63) ausschließlich über die Zwischenstege (68 -71) und über die zweite Plattform (64) mit dem Pedalachsaufnahmekörper (65) in kraftübertragender Verbindung steht, wobei Verformungsmesssensoren (1 - 58), insbesondere Dehnmessstreifen, zur Messung einer belastungsbedingten Verformung des Pedalkörpers (62) an der ersten Plattform (63) und/oder den Zwischenstegen (68 - 71) und/oder der zweiten Plattform (64) angeordnet sind und das Fahrradpedal (61) zusätzlich zum Pedalkörper (62) einen Krafteinleitungskörper (72) aufweist, **dadurch gekennzeichnet, dass** der Krafteinleitungskörper (72) ausschließlich über vier Krafteinleitungsbereiche (73 - 76) mit der ersten Plattform (63) in kraftübertragender Verbindung steht, wobei zumindest einer der Krafteinleitungsbereiche (73 - 76) auf einer Seite der ersten Plattform (63) angeordnet ist und zumindest ein anderer der Krafteinleitungsbereiche (73 - 76) bezüglich der Pedalachse (67) auf einer dazu gegenüberliegenden Seite der ersten Plattform (63) angeordnet ist.

2. Fahrradpedal (61) nach Anspruch 1, **dadurch gekennzeichnet, dass** die vier Krafteinleitungsbereiche (73- 76), welche bezüglich der Pedalachse (67) auf einander gegenüberliegenden Seiten der ersten Plattform (63, 64) angeordnet sind, von der Pedalachse (67) gleich weit beabstandet sind.

3. Fahrradpedal (61) nach Anspruch 1 oder 2, **dadurch gekennzeichnet, dass** die vier Krafteinleitungsbereiche (73-76), welche bezüglich der Pedalachse (67) auf einander gegenüberliegenden Seiten der ersten Plattform (63) angeordnet sind, zueinander spiegelsymmetrisch bezüglich einer gedachten Symmetrieebene (77) sind, wobei die Pedalachse (67) in der Symmetrieebene (77) liegt.

4. Fahrradpedal (61) nach einem der Ansprüche 1 bis 3, **dadurch gekennzeichnet, dass** die erste Plattform (63) und die zweite Plattform (64) jeweils in sich spiegelsymmetrisch bezüglich einer gedachten Symmetrieebene (77) sind, wobei die Pedalachse (67) in der Symmetrieebene (77) liegt.

5. Fahrradpedal (61) nach einem der Ansprüche 1 bis 4, **dadurch gekennzeichnet, dass** jeweils zwei der Zwischenstege (68) zueinander spiegelsymmetrisch bezüglich einer gedachten Symmetrieebene (77) ausgebildet und angeordnet sind, wobei die Pedalachse (67) in der Symmetrieebene (77) liegt.

6. Fahrradpedal (61) nach einem der Ansprüche 1 bis 5, **dadurch gekennzeichnet, dass** jeder der Krafteinleitungsbereiche (73 - 76) als eine Aufnahmeöffnung (78), vorzugsweise in der ersten Plattform (63), mit durch die Aufnahmeöffnung hindurchgeführtem Krafteinleitungsbolzen (79), vorzugsweise des Krafteinleitungskörpers (72), ausgebildet ist.

7. Fahrradpedal (61) nach einem der Ansprüche 1 bis 6, **dadurch gekennzeichnet, dass** der Krafteinleitungskörper (72) eine Bindungseinrichtung (80) zur Befestigung eines Schuhs am Krafteinleitungskörpers (72) aufweist.

8. Fahrradpedal (61) nach Anspruch 7, **dadurch gekennzeichnet, dass** die Bindungseinrichtung (80) eine Bindungsplatte (81) und zumindest einen, vorzugsweise federnd, bewegbaren, vorzugsweise schwenkbaren, Bindungsbacken (82) zur Befestigung eines Bindungsgegenstücks des Schuhs auf der Bindungsplatte (81) aufweist.

9. Fahrradpedal (61) nach einem der Ansprüche 1 bis 8, **dadurch gekennzeichnet, dass** zwei, vier oder acht Verformungsmesssensoren (1 - 58) an jeweils unterschiedlichen Stellen der ersten Plattform (63) und/oder der zweiten Plattform (64) und/oder der Zwischenstege (68 - 71) angeordnet sind und in einer Wheatstone'schen Halbbrücke (84) oder Vollbrücke (85) oder Doppelbrücke (86) miteinander verschaltet sind.

10. Fahrradpedal (61) nach Anspruch 9, **dadurch gekennzeichnet, dass** zumindest zwei der, in einer Wheatstone'schen Halbbrücke (84) oder Vollbrücke (85) oder Doppelbrücke (86) miteinander verschalteten Verformungsmesssensoren (1 - 58) bezogen auf die Pedalachse (67) auf einander gegenüberliegenden Seiten des Pedalkörpers (67) angeordnet sind, und vorzugsweise von der Pedalachse (67) gleich weit beabstandet sind.

## Claims

1. A bicycle pedal (61) having a pedal body (62), wherein the pedal body (62) has a first platform (63) and at least one second platform (64) and a pedal axle receiving body (65) arranged between the platforms (63, 64), wherein a pedal axle bolt (66) of the bicycle pedal (61) is rotatably arranged or arrangeable about a pedal axis (67) in the pedal axle receiving body (65) and the platforms (63, 64) are connected to one another in a force-transmitting manner solely by means of intermediate webs and the first platform (63) is connected to the pedal axle receiving body (65) in a force-transmitting manner solely via the intermediate webs (68-71) and via the second platform (64), wherein deformation sensors (1-58), in particular strain gauges, for measurement of a load-induced deformation of the pedal body (62) are arranged at the first platform (63) and/or the intermediate webs (68-71) and/orthe second platform (64) and the bicycle pedal (61) has a force introduction body (72) in addition to the pedal body (62), **characterized in that** the force introduction body (72) is connected to the first platform (63) in a force-transmitting manner solely via four force introduction regions (73-76), wherein at least one of the force introduction regions (73-76) is arranged on one side of the first platform (63) and at least another of the force introduction regions (73-76) is arranged on a side of the first platform (63) opposite thereto in relation to the pedal axis (67).

2. A bicycle pedal (61) according to claim 1, **characterized in that** the four force introduction regions (73-76), arranged on opposite sides of the first platform (63, 64) in relation to the pedal axis (67), are spaced equally from the pedal axis (67).

3. A bicycle pedal (61) according to claim 1 or 2, **characterized in that** the four force introduction regions (73-76), arranged on opposite sides of the first platform (63) in relation to the pedal axis (67), are mirror symmetrical in relation to one another with regard to a notional plane of symmetry (77), wherein the pedal axis (67) lies in the plane of symmetry (77).

4. A bicycle pedal (61) according to any one of claims 1 to 3, **characterized in that** the first platform (63) and the second platform (64) are in each case inherently mirror-symmetrical with regard to a notional plane of symmetry (77), wherein the pedal axis (67) lies in the plane of symmetry (77).

5. A bicycle pedal (61) according to any one of claims 1 to 4, **characterized in that** in each case two of the intermediate webs (68) are formed and arranged mirror-symmetrical to one another with regard to a notional plane of symmetry (77), wherein the pedal axis (67) lies in the plane of symmetry (77).

6. A bicycle pedal (61) according to any one of claims 1 to 5, **characterized in that** each of the force introduction regions (73-76) is in the form of a receiving opening (78), preferably in the first platform (63), with a force introduction bolt (79), preferably of the force introduction body (72), guided through the receiving opening.

7. A bicycle pedal (61) according to any one of claims 1 to 6, **characterized in that** the force introduction body (72) has a binding device (80) for securing a shoe to the force introduction body (72).

8. A bicycle pedal (61) according to claim 7, **characterized in that** the binding device (80) has a binding plate (81) and at least one, preferably resiliently, movable, preferably pivotable, binding jaw (82) for securing a binding counterpart of the shoe on the binding plate (81).

9. A bicycle pedal (61) according to any one of claims 1 to 8, **characterized in that** two, four or eight deformation sensors (1-58) are arranged at different sites in each case of the first platform (63) and/or the second platform (64) and/or the intermediate webs (68-71) and are wired to one another in a Wheatstone's half-bridge (84) or full-bridge (85) or double bridge (86).

10. A bicycle pedal (61) according to claim 9, **characterized in that** at least two of the deformation sensors (1-58) wired to one another in a Wheatstone's half-bridge (84) or full-bridge (85) or double-bridge (86) are arranged on opposite sides of the pedal body (67) with regard to the pedal axis (67), and preferably are spaced equally from the pedal axis (67).

## Revendications

1. Pédale de vélo (61) comportant un corps de pédale (62), dans laquelle le corps de pédale (62) présente une première plate-forme (63) et au moins une deuxième plate-forme (64) et un corps de réception d'axe de pédale (65) disposé entre les plates-formes (63, 64), dans laquelle une tige d'axe de pédale (66) de la pédale de vélo (61) est ou peut être disposée dans le corps de réception d'axe de pédale (66) de façon rotative autour d'un axe de pédale (67) et les plates-formes (63, 64) sont reliées l'une à l'autre en transmission de force exclusivement au moyen de nervures intermédiaires et la première plate-forme (63) se trouve en liaison de transmission de force avec le corps de réception d'axe de pédale (65) exclusivement par les nervures intermédiaires (68-71) et par la deuxième plate-forme (64), dans laquelle des capteurs de mesure de déformation (1 - 58), en particulier des extensomètres, sont disposés sur la première plate-forme (63) et/ou sur les nervures intermédiaires (68-71) et/ou sur la deuxième plate-forme (64) pour la mesure d'une déformation du corps de pédale (62) due à l'effort appliqué et la pédale de vélo (61) présente un corps d'introduction de force (72) en plus du corps de pédale (62), **caractérisée en ce que** le corps d'introduction de force (72) se trouve en liaison de transmission de force avec la première plate-forme (63) exclusivement par quatre zones d'introduction de force (73 - 76), dans laquelle au moins une des zones d'introduction de force (73 - 76) est disposée sur un côté de la première plate-forme (63) et au moins une autre des zones d'introduction de force (73 - 76) est disposée sur un côté opposé de la première plate-forme (63) par rapport à l'axe de pédale (67).

2. Pédale de vélo (61) selon la revendication 1, **caractérisée en ce que** les quatre zones d'introduction de force (73 - 76), qui sont disposées sur des côtés opposés les uns aux autres de la première plate-forme (63, 64), sont situées à égale distance de l'axe de pédale (67).

3. Pédale de vélo (61) selon la revendication 1 ou 2, **caractérisée en ce que** les quatre zones d'introduction de force (73 - 76), qui sont disposées sur des côtés opposés les uns aux autres de la première plate-forme (63), sont symétriques l'une par rapport à l'autre par rapport à un plan de symétrie virtuel (77), dans laquelle l'axe de pédale (67) se trouve dans le plan de symétrie (77).

4. Pédale de vélo (61) selon l'une quelconque des revendications 1 à 3, **caractérisée en ce que** la première plate-forme (63) et la deuxième plate-forme (64) sont elles-mêmes symétriques par rapport à un plan de symétrie virtuel (77), dans laquelle l'axe de pédale (67) se trouve dans le plan de symétrie (77).

5. Pédale de vélo (61) selon l'une quelconque des revendications 1 à 4, **caractérisée en ce que** chaque fois deux des nervures intermédiaires (68) sont réalisées et disposées de façon symétrique l'une par rapport à l'autre par rapport à un plan de symétrie virtuel (77), dans laquelle l'axe de pédale (67) se trouve dans le plan de symétrie (77).

6. Pédale de vélo (61) selon l'une quelconque des revendications 1 à 5, **caractérisée en ce que** chacune des zones d'introduction de force (73 - 76) est réalisée sous la forme d'une ouverture de réception (78), de préférence dans la première plate-forme (63), avec une tige d'introduction de force (79), de préférence du corps d'introduction de force (72), introduite à travers l'ouverture de réception.

7. Pédale de vélo (61) selon l'une quelconque des revendications 1 à 6, **caractérisée en ce que** le corps d'introduction de force (72) présente un système d'attache (80) pour la fixation d'une chaussure au corps de transmission de force (72).

8. Pédale de vélo (61) selon la revendication 7, **caractérisée en ce que** le système d'attache (80) présente une plaque d'attache (81) et au moins une mâchoire d'attache (82), de préférence à ressort, mobile, de préférence pivotante, pour la fixation d'une pièce d'attache opposée de la chaussure sur la plaque d'attache (81).

9. Pédale de vélo (61) selon l'une quelconque des revendications 1 à 8, **caractérisée en ce que** deux, quatre ou huit capteurs de mesure de déformation (1 - 58) sont disposés sur des côtés respectivement différents de la première plate-forme (63) et/ou de la deuxième plate-forme (64) et/ou des nervures intermédiaires (68 - 71) et ils sont raccordés entre eux en un demi-pont de Wheatstone (84) ou en un pont de Wheatstone complet (85) ou double (86).

10. Pédale de vélo (61) selon la revendication 9, **caractérisée en ce qu'**au moins deux des capteurs de mesure de déformation (1 - 58), raccordés entre eux en un demi-pont de Wheatstone (84) ou en un pont de Wheatstone complet (85) ou double (86), sont disposés sur des côtés opposés l'un à l'autre du corps de pédale (67) par rapport à l'axe de pédale (67), et sont de préférence placés à égale distance de l'axe de pédale (67).
